Europäisches Patentamt

European Patent Office

Office européen des brevets

(11) Numéro de publication: **0 251 122 B1**

# FASCICULE DE BREVET EUROPEEN

(45) Date de publication de fascicule du brevet:
04.09.91

(51) Int. Cl.⁵: **C13C 1/08**, B26D 7/18

(21) Numéro de dépôt: **87108954.6**

(22) Date de dépôt: **23.06.87**

(54) **Coupe-racines comprenant un dispositif de nettoyage des couteaux.**

(30) Priorité: **24.06.86 FR 8609124**

(43) Date de publication de la demande:
**07.01.88 Bulletin 88/01**

(45) Mention de la délivrance du brevet:
**04.09.91 Bulletin 91/36**

(84) Etats contractants désignés:
**AT BE DE GB IT NL SE**

(56) Documents cités:
**FR-A- 638 579**
**FR-A- 1 228 063**

(73) Titulaire: **MAGUIN S.A.**
**B.P. no. 1 Charmes**
**F-02800 La Fère(FR)**

(72) Inventeur: **Swiderski, Michel**
**Rogecourt**
**F-02800 LA FERE(FR)**

(74) Mandataire: **Casalonga, Axel et al**
**BUREAU D.A. CASALONGA - JOSSE Morassistrasse 8**
**W-8000 München 5(DE)**

## Description

La présente invention se rapporte à un coupe-racines à tambour comprenant un dispositif de nettoyage des couteaux pendant le fonctionnement du coupe-racines, par projection d'un fluide sous pression sur les couteaux.

Pendant le fonctionnement des coupe-racines utilisés, par exemple, pour couper en cossettes des betteraves à sucre eu vue de l'extraction du sucre par diffusion, des fibres provenant notamment des parties fibreuses des betteraves et d'autres corps étrangers se fixent sur les tranchants des couteaux et réduisent l'efficacité de ces derniers, provoquant ainsi une chute du débit du coupe-racines.

Sur les coupe-racines à tambour, par exemple du type décrit dans la demande de brevet français n° 2 536 417, dans lesquels un tambour portant les couteaux sur sa périphérie intérieure est entraîné en rotation autour d'un axe horizontal, il est possible de procéder, pendant le fonctionnement du coupe-racines, à un nettoyage, en particulier cyclique, des couteaux sensiblement tangentiels dans la partie haute de coupe-racines, c'est-à-dire dans la partie dans laquelle les couteaux ne sont pas en contact avec les betteraves qui ne remplissent que la partie inférieure du tambour.

Jusqu'à présent, ce nettoyage s'effectue à l'aide d'une rampe de projection d'air comprimé installée en position fixe dans la partie haute du coupe-racines, à l'intérieur du tambour porte-couteaux, pour projeter le fluide vers l'extérieur sur les couteaux sous un angle aigu par rapport à la tangente à la trajectoire des couteaux orientée dans le sens de rotation des couteaux.

Il s'avère que ce dispositif connu par lequel les fibres se trouvant à cheval sur le tranchant des couteaux sont décollées de la face intérieure des couteaux ne donne pas entière satisfaction dans la mesure où il n'assure pas avec certitude l'évacuation complète des fibres qui risquent donc de se remettre à cheval sur les tranchants.

Un autre dispositif de nettoyage connu utilisé sur des coupe-racines à tambour consiste dans la combinaison d'une brosse rotative et d'une rampe à air comprimé installées en position fixe dans la partie haute du coupe-racines à l'intérieur du tambour. La brosse rotative qui précède la rampe dans le sens de rotation des couteaux est entraînée en rotation de manière à brosser les couteaux dans le sens de rotation de ces derniers, à une vitesse supérieure à la vitesse des couteaux, pour décoller les fibres se trouvant à cheval sur les tranchants des couteaux. La rampe est installée de manière à projeter de l'air sous pression sur les couteaux sous un angle obtus par rapport à la tangente à la trajectoire des couteaux, orientée dans le sens de rotation des couteaux.

Ce dispositif connu est certes efficace mais d'un coût élevé et d'une fiabilité incertaine, du fait de l'usure que subit la brosse, ce qui entraîne une maintenance complexe et coûteuse. De plus, toutes les fibres enlevées des couteaux sont rejetées à l'intérieur du tambour, d'où la nécessité de prévoir, à l'intérieur du tambour, une vis d'évacuation.

La présente invention a pour objet un coupe-racines à tambour comprenant un dispositif de nettoyage des couteaux, pendant le fonctionnement du coupe-racines, dispositif qui soit à la fois efficace, simple, d'un coût réduit et fiable.

Le dispositif de nettoyage conforme à l'invention comprend une première rampe de projection d'un fluide sous pression installée en position fixe dans la partie haute du coupe-racines, à l'intérieur du tambour rotatif portant des couteaux sensiblement tangentiels, pour projeter le fluide vers l'extérieur sur les couteaux sous un angle aigu par rapport à la tangente à la trajectoire des couteaux orientée dans le sens de rotation des couteaux. Le dispositif comprend, en outre, une seconde rampe de projection d'un fluide sous pression installée en position fixe dans la partie haute du coupe-racines, à l'intérieur du tambour, pour projeter le fluide vers l'extérieur sur les couteaux sous un angle obtus par rapport à la tangente à la trajectoire des couteaux, orientée dans le sens de rotation des couteaux. La seconde rampe est disposée dans le sens de rotation des couteaux derrière, c'est-à-dire en aval, de la première rampe, les deux rampes étant espacées de manière que les jets des deux rampes se croisent à l'extérieur de la trajectoire des couteaux.

Ce dispositif complètement statique combinant deux rampes de projection agissant en opposition opère, sur chaque couteau, d'abord un décollement des fibres de la face intérieure du couteau, par la première rampe, et ensuite une évacuation vers l'extérieur du tambour, par le même passage que les cossettes, de ces mêmes fibres avant que ces dernières ne puissent se remettre à cheval sur le tranchant du couteau, par la seconde rampe. Les fibres ainsi évacuées se retrouvent donc à l'extérieur du tambour, mélangées aux cossettes coupées, ce qui ne gêne en rien l'extraction ultérieure du sucre des cossettes.

La distance séparant les deux rampes dans le sens circonférentiel du tambour doit être choisie, en fonction de la vitesse d'éjection de l'air par les rampes et de la vitesse de rotation du tambour, de manière à obtenir l'évacuation complète des fibres par la seconde rampe avant que les fibres, décollées des couteaux par la première rampe, ne se remettent à cheval sur le tranchant des couteaux.

Les angles d'inclinaison des deux rampes par rapport à la tangente à la trajectoire des couteaux peuvent être compris de préférence entre 30 et 60° pour la première rampe et entre 120 et 150° pour la seconde rampe. Suivant un mode de réalisation préféré, ces angles sont de l'ordre de 45° pour la première rampe et de l'ordre de 135° pour la seconde rampe.

Les angles d'inclinaison peuvent également être adaptables, par exemple par montage des rampes sur un axe de pivotement.

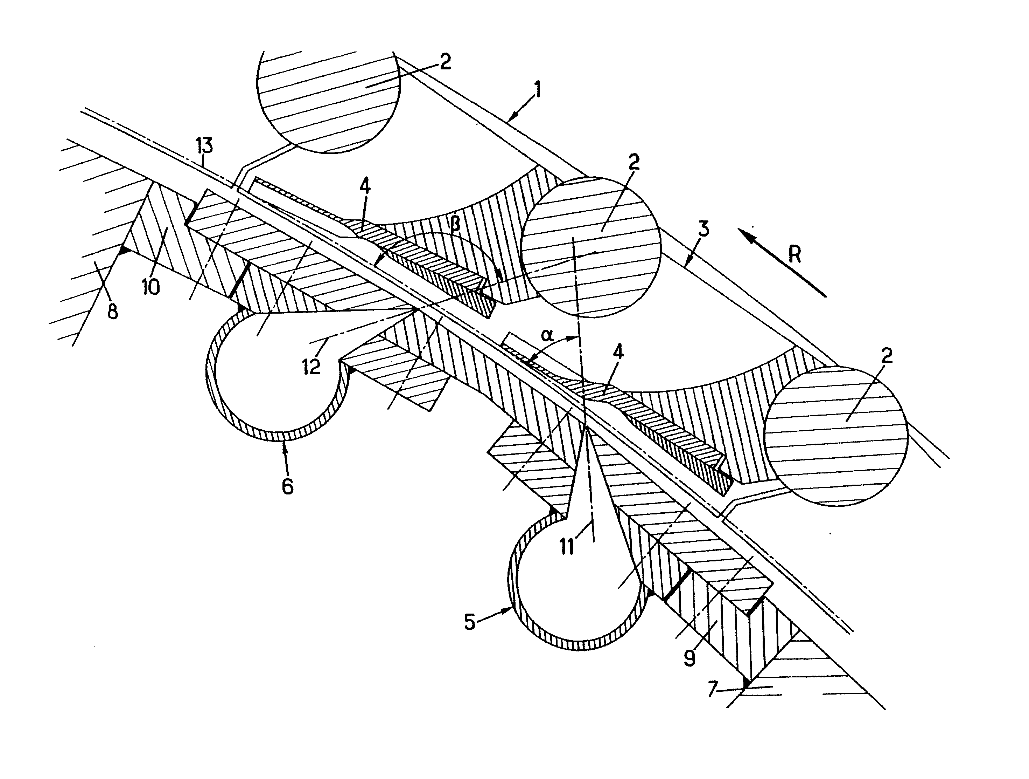

En se référant au dessin annexé, on va décrire ci-après plus en détail un mode de réalisation illustratif et non limitatif d'un dispositif de nettoyage conforme à l'invention.

La figure unique du dessin est une coupe transversale partielle d'un coupe-racines à tambour à l'endroit du dispositif de nettoyage, montrant l'installation de ce dernier en position fixe à l'intérieur du tambour porte-couteaux tournant.

Le coupe-racines à tambour comprend un tambour 1 appelé lanterne entraîné en rotation dans le sens de la flèche R autour d'un axe de rotation horizontal. Sur le dessin, on reconnaît trois bras de lanterne 2 du tambour 1, un porte-couteaux 3 monté par coulissement axial sur les bras de lanterne 2, et deux couteaux 4 fixés sur le porte-couteaux 3.

A l'intérieur du tambour 1 est installé en position fixe un dispositif de nettoyage des couteaux comprenant deux rampes 5, 6 s'étendant chacune sur toute la longueur des couteaux 4 (parallèlement à l'axe de rotation horizontal du tambour 1). Les deux rampes 5, 6 de projection de fluide sous pression sont montées sur la structure interne (bâti) fixe du coupe-racines, symbolisées par deux parties 7, 8 espacées dans le sens circonférentiel. Sur les deux parties fixes 7, 8 sont fixées deux glissières 9, 10 recevant de façon amovible les deux rampes 5, 6 réalisées sous la forme d'un ensemble. Pour des raisons de fabrication, les deux rampes 5, 6 sont formées par assemblage de plusieurs pièces réunies par des vis. Sur le dessin, on n'a représenté que les axes des vis d'assemblage des différentes pièces des rampes 5, 6, ainsi que les axes des vis d'assemblage de l'ensemble des deux rampes 5, 6 avec les glissières 9, 10.

Les deux rampes 5, 6 sont conformées de manière à produire des jets 11, 12 dirigés de façon oblique et en opposition vers l'extérieur, de manière que les deux jets 11, 12 se croisent par l'extérieur de la trajectoire 13 des couteaux 4. Le jet 11 de la rampe 5 fait un angle ∝ de l'ordre de 45° avec la tangente à la trajectoire 13 des couteaux 4, orientée dans le sens de rotation. Le jet 12 de la rampe 6 fait un angle β de l'ordre de 135° avec la trajectoire des couteaux 4.

Au passage des couteaux, le jet 11 de la première rampe 5 décolle de la face intérieure des couteaux les fibres et autres corps étrangers qui se fixent à cheval sur le tranchant des couteaux 4, et le jet 12 de la seconde rampe 6 évacue vers l'extérieur, par l'interval le prévu entre les couteaux 4 successifs pour le passage des cossettes, les fibres décollées par le jet 11, avant que ces fibres n'aient pu se remettre à cheval sur les tranchants des couteaux. La distance réciproque optimale, dans le sens circonférentielle, des deux rampes 5, 6 doit par conséquent être choisie en fonction de la vitesse de rotation du tambour 1 et en tenant par ailleurs compte de la vitesse d'éjection des jets 11, 12, c'est-à-dire de la pression du fluide.

Il y a lieu de noter à ce sujet que ce fluide peut être de l'air comprimé, mais également tout autre fluide disponible, par exemple de la vapeur ou de l'eau sous pression.

Par ailleurs, l'invention est applicable sur tout autre type de coupe-racines, à plateau horizontal par exemple.

**Revendications**

1. Coupe-racines à tambour comprenant un dispositif de nettoyage des couteaux pendant le fonctionnement du coupe-racines, le dispositif de nettoyage des couteaux comprenant une première rampe (5) de projection d'un fluide sous pression, installée en position fixe dans la partie haute du coupe-racines, à l'intérieur du tambour rotatif (1) portant les couteaux (4) sensiblement tangentiels, pour projeter le fluide vers l'extérieur contre les couteaux sous un angle aigu (∝) par rapport à la tangente à la trajectoire (13) des couteaux, orientée dans le sens de rotation des couteaux, caractérisé par le fait que le dispositif de nettoyage des couteaux comprend, en outre, une seconde rampe (6) de projection d'un fluide sous pression installée en position fixe dans la partie haute du coupe-racines, à l'intérieur du tambour (4), pour projeter le fluide vers l'extérieur contre les couteaux sous un angle obtus (β) par rapport à la tangente à la trajectoire (13) des couteaux, orientée dans le sens de rotation des couteaux, la seconde rampe (6) étant disposée, dans le sens de rotation des couteaux, derrière, c'est-à-dire en aval, de la première rampe (5), et les deux rampes (5, 6) étant espacées l'une de l'autre dans le sens circonférentiel de manière que les jets des deux rampes se croisent à l'extérieur de la trajectoire des couteaux.

2. Coupe-racines à tambour comprenant un dispositif de nettoyage des couteaux suivant la revendication 1, caractérisé par le fait que les rampes (5, 6) sont disposées de manière que la première rampe (5) projette le fluide sous un angle compris entre 30 et 60° et la seconde rampe projette le fluide sous un angle compris entre 120 et 150° par rapport à la tangente à la trajectoire des couteaux, orientée dans le sens de rotation des couteaux.

3. Coupe-racines à tambour comprenant un dispositif de nettoyage des couteaux suivant la revendication 2, caractérisé par le fait que la première rampe projette le fluide sous un angle de l'ordre de 45° et la seconde rampe projette le fluide sous un angle de l'ordre de 135°.

## Claims

1. A drum-type root cutter comprising a device for cleaning the knives during operation of the root cutter, the knife cleaning device comprising a first distributor (5) for projecting a fluid under pressure and installed in a fixed position in the top part of the root cutter inside the rotary drum (1) bearing the substantially tangenital knives (4), to project the fluid outwardly against the knives at an acute angle (α) with respect to the tangent to the trajectory (13) of the knives, oriented in the direction of rotation of said knives, characterised in that the knife cleaning device also comprises a second distributor (6) for projecting a fluid under pressure and installed in a fixed position in the top part of the root cutter inside the drum (4) to project the fluid outwardly against the knives at an obtuse angle (β) with respect to the tangent to the trajectory (13) of the knives, oriented in the direction of rotation of the knives, the second distributor (6) being disposed, as considered in the direction of rotation of the knives, behind, i.e. downstream of, the first distributor (5), and the two distributors (5, 6) being spaced apart in the circumferential direction so that the jets of the two distributors cross outside the trajectory of the knives.

2. A drum-type root cutter comprising a knife cleaning device according to claim 1, characterised in that the distributors (5, 6) are so disposed that the first distributor (5) projects the fluid at an angle of between 30 and 60° and the second distributor projects the fluid at an angle of between 120 and 150° with respect to the tangent to the trajectory of the knives, oriented in the direction of rotation of the knives.

3. A drum-type root cutter comprising a knife cleaning device according to claim 2, characterised in that the first distributor projects the fluid at an angle of the order of 45° and the second distributor projects the fluid at an angle of the order of 135°.

## Patentansprüche

1. Trommelschnitzelmaschine mit einer Vorrichtung zum Reinigen der Messer während des Betriebes der Schnitzelmaschine, ausgestattet mit einem zum Ausspritzen einer Druckflüssigkeit bestimmten ersten Spritzrohr (5), das feststehend im oberen Teil der Schnitzelmaschine im Inneren der die im wesentlichen tangential angeordneten Messer (4) tragenden umlaufenden Trommel (1) angeordnet ist, um die Flüssigkeit nach außen gegen die Messer unter einem spitzen Winkel (∝) zur Tangente an die Bahn (13) der Messer, gesehen in Drehrichtung der Messer, zu spritzen, dadurch gekennzeichnet, daß die Vorrichtung zum Reinigen der Messer außerdem ein zweites zum Ausspritzen einer Druckflüssigkeit dienendes Spritzrohr (6) aufweist, das feststehend im oberen Teil der Schnitzelmaschine im Inneren der Trommel (1) angeordnet ist, um die Flüssigkeit nach außen gegen die Messer unter einem stumpfen Winkel (β) zur Tangente an die Bahn (13) der Messer, gesehen in Drehrichtung der Messer, zu spritzen, daß das zweite Spritzrohr (6) in Drehrichtung der Messer hinter, d.h. stromabwärts gegenüber dem ersten Spritzrohr (5) angeordnet ist, und daß die beiden Spritzrohre (5, 6) in Umfangsrichtung einen solchen Abstand voneinander haben, daß die Strahlen der beiden Spritzrohre sich außerhalb der Bahn der Messer kreuzen.

2. Trommelschnitzelmaschine mit einer Vorrichtung zum Reinigen der Messer, gemäß Anspruch 1, dadurch gekennzeichnet, daß die Spritzrohre (5, 6) so angeordnet sind, daß das erste Spritzrohr (5) die Flüssigkeit unter einem Winkel zwischen 30° und 60° und das zweite Spritzrohr (6) die Flüssigkeit unter einem Winkel zwischen 120° und 150° zur Tangente an die Bahn der Messer ausspritzt, gesehen in Drehrichtung der Messer.

3. Trommelschnitzelmaschine mit einer Vorrichtung zum Reinigen der Messer, gemäß Anspruch 2, dadurch gekennzeichnet, daß das erste Spritzrohr die Flüssigkeit unter einem Winkel von etwa 45° und das zweite Spritzrohr die Flüssigkeit unter einem Winkel von etwa 135° ausspritzt.